# EUROPEAN PATENT APPLICATION

(11) **EP 4 625 583 A1**
(43) Date of publication of application: **01.10.2025**
(21) Application number: 23893300.6
(22) Date of filing: 21.08.2023
(51) Int. Cl.: H01M 10/0567, H01M 10/0525, H01M 10/054

(54) **NON-AQUEOUS ELECTROLYTE SOLUTION AND SECONDARY BATTERY**

(30) Priority: 21.11.2022 CN 202211457888
(71) Applicant: Guangzhou Tinci Materials Technology Co., Ltd, Guangzhou, Guangdong 510700 (CN); Jiujiang Tinci Materials Technology Co., Ltd., Jiujiang, Jiangxi 332500 (CN)
(72) Inventor: CAO, Gejin, Guangzhou, Guangdong 510700 (CN); FAN, Weizhen, Guangzhou, Guangdong 510700 (CN); ZHAO, Jingwei, Guangzhou, Guangdong 510700 (CN)
(74) Representative: Pfenning, Meinig & Partner mbB
(86) International application number: PCT/CN2023/114124
(87) International publication number: WO 2024/109206

(57) **Abstract**

The present application relates to the technical field of batteries. Disclosed are a non-aqueous electrolyte solution and a secondary battery. The non-aqueous electrolyte solution includes a bicyclic sulfate compound and a bicyclic sulfite compound; and a content of the bicyclic sulfite compound in the non-aqueous electrolyte solution is 1 ppm to 500 ppm, based on a total mass of the non-aqueous electrolyte solution. The non-aqueous electrolyte solution can significantly improve high-temperature storage performance, low-temperature discharge performance, capacity exertion and capacity consistency of a secondary battery.

## Description

The present application claims the priority of the Chinese Patent Application No. 202211457888.2, with the title of "NON-AQUEOUS ELECTROLYTE SOLUTION AND SECONDARY BATTERY", filed on November 21, 2022 before the China National Intellectual Property Administration, which is incorporated herein by reference in its entirety.

### TECHNICAL FIELD

The present application relates to the technical field of batteries, and in particular, to a non-aqueous electrolyte solution and a secondary battery.

### BACKGROUND

The large-scale application of lithium-ion batteries in new energy vehicles, smart grids and other fields is currently increasing year by year, but at present the inconsistency of battery parameters is a key factor affecting the service life of battery groups. Although the improvement of thermal management level ensures the safe operation of lithium-ion battery packs to some extent, improving the consistency level of the battery is still an important technical influencing factor in the large-scale application of lithium-ion batteries. Lithium-ion battery consistency refers to the consistency of initial performance indicators of a group of single cells, including: capacity, impedance, electrical characteristics of electrodes, electrical connections, temperature characteristic, decay rate, etc. The inconsistency of the above performance indicators will directly affect the difference in output electrical parameters during operation. Since the lithium-ion battery packs used in the field of power are all composed of many single lithium-ion batteries, the poor consistency in these single lithium-ion batteries will affect the use of the battery packs. In severe cases, the entire lithium-ion battery pack will be unusable. Due to the multiple manufacturing and production processes of lithium-ion power batteries, which are influenced by various factors, the performance differences of individual batteries produced by multiple processes are significant, which is not conducive to their application in the field of power.

At present, there are some studies on methods to improve battery consistency, usually by improving the battery structure or formation process. For example, CN109037524A disclosed improvements to electrode sheets, tabs, and busbars, etc. in the internal structure of the battery to reduce costs and increase the heat dissipation area. This is also beneficial to improving battery consistency, ensuring that the batteries work in the same environment, and significantly improving the performance of the battery pack. The method claimed in CN109037524A is more about reducing costs. CN114618799A disclosed that a battery cell to be grouped is connected in parallel and set aside before experiencing the grouping process, and the voltage of all the battery cells to be grouped is adjusted to be consistent due to the principle that the voltage of parallel circuits is consistent, thereby improving the initial voltage consistency of the battery cells or parallel modules in each series circuit of the battery system after grouping. Furthermore, the charge state range of the battery group during use is controlled to further ensure the consistency of the battery cells during use and improve the service life of the battery system. CN102280665B disclosed an improvement of the production process starting from grading the positive electrode sheet and the negative electrode sheet according to the weight of each sheet, thereby improving the consistency of the lithium-ion power battery, prolonging the service life of the battery and ensuring the safe use of the battery. Unfortunately, the above methods only improve the consistency of the battery from aspects of battery structure, grouping process, sorting, etc., and cannot improve the consistency of battery capacity itself.

### SUMMARY

To overcome the disadvantages of the prior art, the present application provides a non-aqueous electrolyte solution and a secondary battery. The non-aqueous electrolyte solution can significantly improve high-temperature storage performance, low-temperature discharge performance, capacity exertion and capacity consistency of the secondary battery.

In order to achieve the above objectives, the present application mainly provides the following technical solutions.

In a first aspect, the present application provides a non-aqueous electrolyte solution, including a bicyclic sulfate compound represented by Formula 1 and a bicyclic sulfite compound represented by Formula 2, 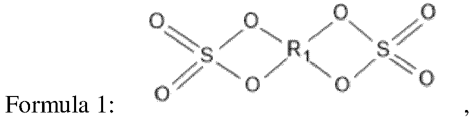 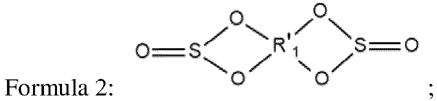
in Formula 1 and Formula 2, R₁ and R'₁ are each a linking group independently selected from the group consisting of alkyl having 2 to 8 carbon atoms, cycloalkyl, phenyl, and a combination thereof, and R₁ and R'₁ are the same to or different from each other;
a content of the bicyclic sulfite compound in the non-aqueous electrolyte solution is 1 ppm to 500 ppm, based on a total mass of the non-aqueous electrolyte solution.

Researches show that the bicyclic sulfate compound can form a solid electrolyte interface (SEI) film on a negative electrode to protect the battery electrode and improve the high-temperature cycling stability of the battery. In addition, the introduced sulfur element can increase the ionic conductivity and significantly reduce the impedance of the battery. After the bicyclic sulfate compound forms the SEI film on the negative electrode, the SEI film will become rough or damaged during the charging and discharging process of the battery, thus affecting the cycling stability of the battery. When adding a small amount of bicyclic sulfite compound to the electrolyte solution at the same time, the small amount of bicyclic sulfite compound can be oxidized into a bicyclic sulfate compound during the battery electrochemical process, which can repair the rough or damaged SEI film and make the SEI film smoother and flatter, thereby reducing the consumption of reversible lithium, facilitating the migration of lithium ions, and further improving the capacity performance and the capacity consistency of the battery.

The study has shown that when the amount of the bicyclic sulfite compound added to the non-aqueous electrolyte solution is too small, the SEI film repairing effect of the bicyclic sulfite compound cannot be fulfilled. When the amount of the bicyclic sulfite compound is too large, the high-temperature cycle performance and the low-temperature cycle performance of the battery will be reduced. A content of the bicyclic sulfite compound in the non-aqueous electrolyte solution is preferably 1 ppm to 500 ppm, more preferably 2 ppm to 100 ppm.

In some embodiments of the present application, a mass percentage of the bicyclic sulfate compound in the non-aqueous electrolyte solution is 0.1% to 5%, based on the total mass of the non-aqueous electrolyte solution.

In some embodiments of the present application, a mass ratio of the bicyclic sulfite compound to the bicyclic sulfate compound in the non-aqueous electrolyte solution is 2×10⁻⁵ to 1×10⁻².

In some embodiments of the present application, the mass ratio of the mass percentage of the bicyclic sulfite compound to the bicyclic sulfate compound in the non-aqueous electrolyte solution is 2×10⁻⁵ to 5×10⁻³.

In some embodiments of the present application, R₁ and R'₁ in Formula 1 and Formula 2 are the same groups, i.e., the bicyclic sulfate compound and the bicyclic sulfite compound added in the non-aqueous electrolyte have the same parent ring structure. In the battery electrochemical process, the bicyclic sulfite compound of Formula 1 can be oxidized into the bicyclic sulfate compound of Formula 2, which has the same component as the repaired SEI film in the electrolyte solution, and it is beneficial to improving the flatness of the SEI film, and further improving the capacity performance and the capacity consistency of the battery.

In some embodiments of the present application, in Formula 1 and Formula 2, both R₁ and R'₁ are linking groups having a structure of 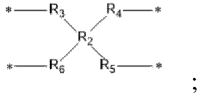
wherein, R₂ is selected from the group consisting of 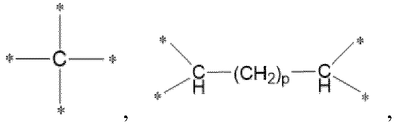 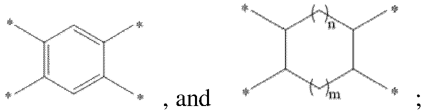
p is an integer from 0 to 6, n is an integer from 0 to 3, and m is an integer from 0 to 3; and
R₃, R₄, R₅, and R₆ are each independently selected from the group consisting of a carbon-carbon single bond, methylene, and 1,2-ethylidene.

In some embodiments of the present application, the bicyclic sulfate compound is selected from the group consisting of compounds represented by the following structural formulae: 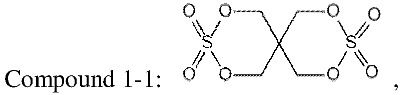 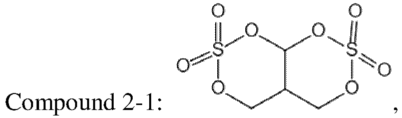 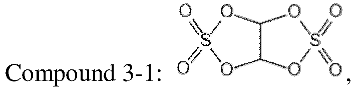 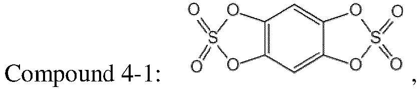 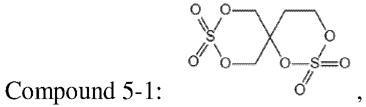 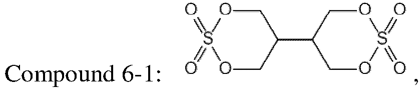 and 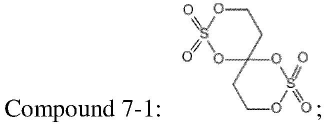 and
the bicyclic sulfite compound is selected from the group consisting of compounds represented by the following structural formulae: 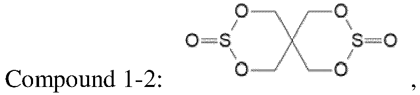 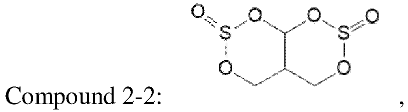 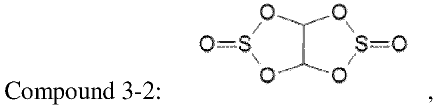 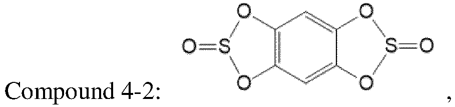 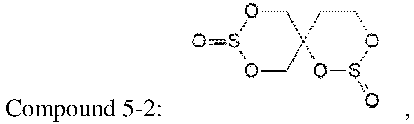 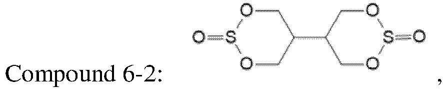 and

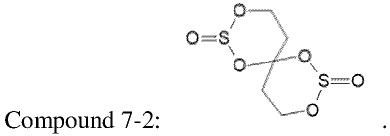

In some embodiments, the bicyclic sulfite compound contained in the non-aqueous electrolyte solution can be oxidized to obtain the bicyclic sulfate compound contained in the non-aqueous electrolyte solution. Preferably, the non-aqueous electrolyte solution contains at least one of the following combinations of the bicyclic sulfate compound and the bicyclic sulfite compound: Compound 1-1 and Compound 1-2, Compound 2-1 and Compound 2-2, Compound 3-1 and Compound 3-2, Compound 4-1 and Compound 4-2, Compound 5-1 and Compound 5-2, Compound 6-1 and Compound 6-2, and Compound 7-1 and Compound 7-2.

In the present application, the bicyclic sulfite compound can be additionally added to the electrolyte solution as a separate substance, or can be introduced into the electrolyte solution via the bicyclic sulfate compound.

In some embodiments of the present application, the bicyclic sulfite compound contained in the non-aqueous electrolyte solution can be introduced via the bicyclic sulfate compound. Specifically, the bicyclic sulfite compound is introduced by adding a bicyclic sulfate compound containing a small amount of the bicyclic sulfite compound to the non-aqueous electrolyte solution, and the bicyclic sulfite compound can be a small amount of impurities which are not reacted in the preparation process of the bicyclic sulfate compound. By introducing the bicyclic sulfite compound into the electrolyte solution in this way, it is unnecessary to use a high-purity bicyclic sulfite compound, which can reduce the production cost.

Specifically, the bicyclic sulfate compound containing a small amount of the bicyclic sulfite compound can be prepared by obtaining a crude bicyclic sulfate compound through a two-step reaction of the following reaction Scheme a and Scheme b, and subjecting the crude bicyclic sulfate compound to a purification step and a drying step.

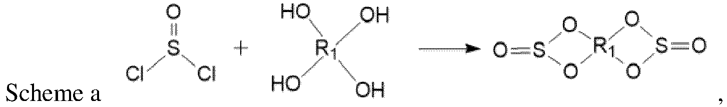

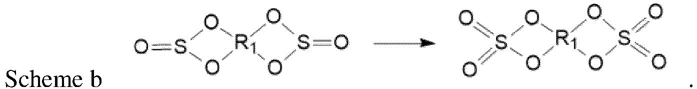

In some embodiments of the present application, the above purification step is preferably recrystallization, more preferably recrystallization through dichloroethane or dichloromethane washing. The crude bicyclic sulfate compound can yield a high-purity bicyclic sulfate compound through multiple dichloroethane or methylene chloride washings and recrystallizations, and the content of the bicyclic sulfite compound therein can be controlled. Specifically, the number of recrystallization is not particularly limited until the content of the bicyclic sulfite compound contained in the obtained bicyclic sulfate compound reaches a desired range.

In some embodiments of the present application, a feeding molar ratio of thionyl chloride to the tetraol compound in the reaction as shown in the Scheme a is (2 to 8):1, more preferably (2.5 to 6):1. The reaction of thionyl chloride with alcohol can be carried out in a solvent such as dichloromethane, dichloroethane, toluene, benzene, cyclohexane, carbon tetrachloride, or without a solvent. In some embodiments, the reaction of thionyl chloride with alcohol is carried out without a solvent.

In some embodiments of the present application, in the reaction as shown in the Scheme a, a temperature in the reaction of thionyl chloride with the tetraol compound is -10°C to 80°C, preferably 15°C to 80°C, and more preferably 20°C to 60°C. A duration of the reaction is 1 to 10 hours, preferably 3 to 8 hours, and more preferably 4 to 7 hours.

In some embodiments of the present application, in the reaction as shown in the Scheme a, after the reaction of thionyl chloride with the tetraol compound is completed, the reaction product is crystallized by lowering the temperature and filtered to obtain the bicyclic sulfite compound.

In some embodiments of the present application, in the reaction as shown in the Scheme b, the bicyclic sulfite compound obtained by the Scheme a is subjected to oxidation in the presence of a catalyst, an oxidant and a solvent so as to obtain the bicyclic sulfate compound.

In the reaction as shown in the Scheme b, the solvent is selected from the group consisting of acetonitrile, dichloromethane, dichloroethane, trichloromethane, tetrachloromethane, and a combination thereof. The oxidant is selected from the group consisting of peroxysulfuric acid, peroxydisulfate, sodium hypochlorite, sodium periodate, potassium permanganate, hydrogen peroxide, and a combination thereof. Preferably, the oxidant is selected from the group consisting of sodium hypochlorite, sodium periodate, potassium permanganate, and a combination thereof. The catalyst can be selected from the group consisting of a water-soluble metal salt, a hydrate of a water-soluble metal salt, and a combination thereof. Preferably, the catalyst is a water-soluble transition metal salt. Specifically, the water-soluble transition metal salt can be selected from the group consisting of titanate, ruthenium trichloride, rhodium trichloride, iridium trichloride, manganese sulfate, manganese chloride, and a combination thereof. Preferably, the water-soluble transition metal salt is selected from the group consisting of titanate, ruthenium trichloride, rhodium trichloride, iridium trichloride, and a combination thereof.

In the reaction as shown in the Scheme b, a molar ratio of the bicyclic sulfite compound to the oxidant and the catalyst is 1:(1 to 6):(0.02% to 5%). Preferably, the molar ratio of the bicyclic sulfite compound to the oxidant and the catalyst is 1:(1 to 4):(0.02% to 3%). More preferably, the molar ratio of the bicyclic sulfite compound to the oxidant and the catalyst is 1:(1 to 3):(0.1% to 3%).

In the reaction as shown in the Scheme b, a temperature of the oxidation of the bicyclic sulfite compound is -20°C to 40°C, and preferably -10°C to 30°C. A duration of the oxidation of the bicyclic sulfite compound is 0.5 to 5 hours, and preferably 0.5 to 3 hours.

In the reaction as shown in the Scheme b, after the oxidation of the bicyclic sulfite compound is completed, the solvent is removed to obtain a crude bicyclic sulfate compound, the crude bicyclic sulfate compound is subjected to a purification step and a drying step to obtain a bicyclic sulfate compound containing the specific content stated above of the bicyclic sulfite compound, in which the purification step is recrystallization through dichloroethane or methylene chloride washing.

In some embodiments of the present application, the non-aqueous electrolyte solution further includes a non-aqueous solvent;
the non-aqueous solvent is selected from the group consisting of a circular solvent, a linear solvent, and a combination thereof;
the circular solvent is selected from the group consisting of ethylene carbonate, propylene carbonate, γ-butyrolactone, phenyl acetate, 1,4-butane sultone, 3,3,3-trifluoropropylene carbonate, and a combination thereof;
the linear solvent is selected from the group consisting of dimethyl carbonate, ethyl methyl carbonate, diethyl carbonate, methyl formate, ethyl acetate, methyl acetate, propyl acetate, butyl acetate, methyl propionate, ethyl propionate, propyl propionate, butyl propionate, methyl butyrate, ethyl butyrate, ethylene glycol diethyl ether, diethylene glycol dimethyl ether, methyl propyl carbonate, 1,1,2,2-tetrafluoroethyl-2,2,3,3-tetrafluoropropyl ether, methyl 2,2,2-trifluoroethyl carbonate, bis(2,2,2-trifluoroethyl)carbonate, 2,2-difluoroethyl acetate, 2,2-difluoroethyl propionate, 2,2-difluoroethyl methyl carbonate, and a combination thereof; and
a mass percentage of the non-aqueous solvent in the non-aqueous electrolyte solution is 75% to 94.99%.

In some embodiments of the present application, the non-aqueous electrolyte solution further includes an electrolyte salt;
the electrolyte salt is selected from the group consisting of a lithium salt and a sodium salt;
the lithium salt is selected from the group consisting of lithium hexafluorophosphate, lithium tetrafluoroborate, lithium bis(oxalato)borate, lithium difluorophosphate, lithium difluoro(oxalato)phosphate, lithium difluoro(oxalato)borate, lithium tetrafluoro(oxalato)phosphate, lithium bis(fluorosulfonyl)imide, and a combination thereof;
the sodium salt is selected from the group consisting of sodium fluorophosphate, sodium tetrafluoroborate, sodium trifluoromethanesulfonate, sodium bis(oxalato)borate, sodium difluorophosphate, sodium difluoro(oxalato)phosphate, sodium tetrafluoro(oxalato)phosphate, sodium bis(fluorosulfonyl)imide, and a combination thereof; and
a mass percentage of the electrolyte salt in the non-aqueous electrolyte solution is 5% to 20%.

In a second aspect, the present application further provides a secondary battery, including a positive electrode, a negative electrode, a separator and the above-mentioned non-aqueous electrolyte solution.

In some embodiments of the present application, the positive electrode material can be selected from the group consisting of A₁₊ₐ(NiₓN_{y}M_{1-x-y})O₂, A(NiₚMn_{q}Co_{2-p-q})O₄, AₖMₕ(PO₄)ₘ, and a combination thereof; where 0≤a≤0.3, 0≤x≤1, 0≤y≤1, 0<x+y≤1; 0≤p≤2, 0≤q≤2, 0<p+q≤2; 0<h<5, 0<k<5, and 0<m<5; A is Li or Na, N and M are Fe, Ni, Co, Mn, Al or V.

In some embodiments of the present application, the negative electrode material can be selected from the group consisting of metallic lithium, lithium alloy, metallic sodium, sodium titanate, graphite, carbon, hard carbon, soft carbon, silicon-based negative electrode material, tin-based negative electrode material, and a combination thereof.

The secondary battery provided in the present application can be a lithium-ion battery or a sodium-ion battery. The positive electrode and the negative electrode used can be prepared by conventional methods in the art, and the secondary battery provided in the present application can be assembled by conventional methods.

One or more technical solutions provided in the embodiments of the present application have at least the following technical effects or advantages:
The non-aqueous electrolyte solution provided by the present application can significantly improve the high-temperature storage, low-temperature discharge and capacity performance of the secondary battery by adding a specific amount of the bicyclic sulfite compound and the bicyclic sulfate compound. Compared with only adding the bicyclic sulfate compound, the electrolyte solution further with a small amount of the bicyclic sulfite compound can significantly improve the capacity consistency of the secondary battery, and meanwhile, it has no negative impact on the high-temperature storage and low-temperature discharge performance of the battery.

### DETAILED DESCRIPTION

In order to further explain the technical means of the present application to achieve the intended purpose and the technical effects achieved by the technical means, the specific implementation methods, structures, features and effects of the present application are described in detail below in combination with preferred embodiments.

It should be noted that different "an embodiment" or "embodiments" in the present application do not necessarily refer to the same embodiment. In addition, specific features, structures, or characteristics in one or more embodiments may be combined in any suitable form. It should be understood that the embodiments of this application are explanations of the scheme of the present application and are not intended to limit the scope of protection of the present application.

In the present application, ranges may be expressed as a range from "about" one specific value and/or to "about" another specific value. When expressing such a range, examples include starting from the specific value and/or ending at another specific value. Similarly, when the antecedent "about" is used to indicate that a value is an approximation, it should be understood that the specific value constitutes another aspect. It should also be understood that the endpoints of each range are meaningful when the endpoints have relation to one endpoint while have no relation to the other endpoint.

Unless otherwise stated, it is not intended that any method described herein be construed that its steps should be performed in a specific order. Therefore, when a method claim does not actually state that its steps follow a certain order or it does not specifically indicate in any other way in the claims or description that the steps are limited to a specific order, it is not intended to imply any particular order.

Although the term "comprising" may be used to disclose various features, elements, or steps of a particular embodiment, it should be understood that this implies that the term "comprising" may be replaced with the phrase "consisting of" or "consisting essentially of". Thus, for example, the alternative embodiments for a method comprising A+B+C include embodiments in which the method consists of A+B+C and embodiments in which the method consists essentially of A+B+C.

### Example 1

This example is used to provide the preparation steps of a bicyclic sulfate having a structure of Compound 1-1:
Compound 1-1:
   (1) thionyl chloride (1 mol) and pentaerythritol (0.2 mol) were added to a reaction bottle protected by nitrogen circulation at room temperature, and the reaction temperature was raised to 50°C with stirring to obtain a reaction mixture, and the duration of the reaction with stirring was 7 h. After the reaction was completed, the reaction mixture was cooled to room temperature, and subjected to solid-liquid separation. The liquid thionyl chloride was recycled for use, and the solid was a bicyclic sulfite (3,9-dioxide-2,4,8,10-tetraoxa-3,9-dithiaspiro[5.5]undecane) (Compound 1-2), with a yield of 82.5% and a purity of 99.7%;
Compound 1-2:
   (2) acetonitrile, the bicyclic sulfite (0.171 mol) prepared in the step (1), and hydrated ruthenium trichloride (0.21% of a mass of the bicyclic sulfite) were added to a reaction bottle in sequence, and after the temperature was lowered to -10°C and stabilized, a sodium hypochlorite (0.34 mol) solution was added dropwise to the reaction bottle, and the temperature was maintained at room temperature after the dropwise addition was completed. The duration of the reaction was 1 h. After the reaction was completed, an organic phase was collected, the acetonitrile was distilled off under reduced pressure, and the resultant was recrystallized with dichloroethane and dried to obtain the Compound 1-1, with a total yield of 82.2%. By washing with dichloroethane and recrystallizing 9 times, 7 times, 6 times, 3 times, 2 times, 1 time and 0 time, bicyclic sulfates (Compound 1-1) containing 1 ppm, 23 ppm, 167 ppm, 2340 ppm, 4117 ppm, 9130 ppm, and 12190 ppm of bicyclic sulfite (Compound 1-2) were obtained, respectively, and contents of moisture in these bicyclic sulfates were all of ≤50 ppm. The content of the bicyclic sulfite contained in the bicyclic sulfate compound was measured by GC-MS, and the content of moisture was measured by a moisture meter.

### Example 2

This example is used to provide the preparation steps of a bicyclic sulfate having a structure of Compound 6-1:
Compound 6-1:
   (1) thionyl chloride (1 mol) and 1,1,2,2-tetramethylolethane (0.2 mol) were added to a reaction bottle protected by nitrogen circulation at room temperature, and the reaction temperature was raised to 50°C with stirring, and the duration of the reaction with stirring was 7 h. After the reaction was completed, the reaction was cooled to room temperature, and the solid-liquid separation was performed. The liquid thionyl chloride was recovered for use, and the solid was a bicyclic sulfite (Compound 6-2), with a yield of 81.1% and a purity of 99.5%;
Compound 6-2:
   (2) acetonitrile, the bicyclic sulfite (0.171 mol) prepared in the step (1), and hydrated ruthenium trichloride (0.21% of a mass of the bicyclic sulfite) were added to the reaction bottle in sequence, and after the temperature was cooled to -10°C and stabilized, a sodium hypochlorite (0.35 mol) solution was added dropwise to the reaction bottle, and the temperature was maintained at room temperature after the dropwise addition was completed. The duration of the reaction was 1 h. After the reaction was completed, the organic phase was collected, the acetonitrile was distilled off under reduced pressure, and the resultant was recrystallized with dichloroethane and dried to obtain the Compound 6-1, with a total yield of 82%. By washing with dichloroethane and recrystallizing 4 times and 1 time, bicyclic sulfates (Compound 6-1) containing 1 ppm and 2013 ppm of bicyclic sulfite (Compound 6-2) were obtained, respectively, and contents of moisture in these bicyclic sulfates were all of ≤50 ppm. The content of the bicyclic sulfite contained in the bicyclic sulfate compound was measured by GC-MS, and the content of moisture was measured by a moisture meter.

### Examples 3 to 14:

Examples 3 to 14 provide preparation steps of the electrolyte solution and the secondary battery.

An electrolyte salt, an additive and a solvent were mixed to obtain an electrolyte solution; where the types of the electrolyte salt and the solvent used are shown in Table 1. The additive was the bicyclic sulfate compound prepared in Example 1 or Example 2, and the content of the bicyclic sulfate compound in the electrolyte solution, the content of the bicyclic sulfite compound contained in the bicyclic sulfate compound, and the content of the bicyclic sulfite compound introduced into the electrolyte solution via the bicyclic sulfate compound are shown in Table 1. In addition to the electrolyte salt and the additive, the rest of the electrolyte solution was solvent.

In Table 1, EC:EMC=1:2 means that the weight ratio of EC (ethylene carbonate) to EMC (ethyl methyl carbonate) is 1:2, EC:FEMC=1:2 means that the weight ratio of EC (ethylene carbonate) to FEMC (methyl 2,2,2-trifluoroethyl carbonate) is 1:2, and EC:PC:EMC=0.5:0.5:2 means that the weight ratio of EC (ethylene carbonate), PC (propylene carbonate) and EMC (ethyl methyl carbonate) is 0.5:0.5:2.

Preparation of a lithium-ion secondary battery is shown as follows. The positive electrode material was LiNi_{0.8}Co_{0.1}Mn_{0.1}O₂, the negative electrode material was artificial graphite, the separator was a polyethylene film, and the electrolyte solution was the electrolyte solution prepared as described above. These materials were prepared and assembled into a soft-pack battery according to a conventional method, and the designed capacity was 1750 mAh.

Preparation of a sodium-ion secondary battery is shown as follows. The positive electrode material used was NaNi_{1/3}Mn_{1/3}Fe_{1/3}O₂, the negative electrode material was hard carbon, the separator was a polyethylene film, and the electrolyte solution was the electrolyte solution prepared as described above. These materials were prepared and assembled into a soft-pack battery according to conventional methods, and the designed capacity was 800 mAh.

### Comparative Example 1

Compared with Examples 3 to 11, the difference was that the electrolyte solution in this comparative example did not contain an additive.

### Comparative Example 2

Compared with Example 5, the difference was that the content of the Compound 1-2 contained in the Compound 1-1 in this comparative example was 1 ppm.

### Comparative Example 3

Compared with Example 3, the difference was that the content of the Compound 1-2 contained in the Compound 1-1 in this comparative example was 1 ppm.

### Comparative Example 4

Compared with Example 9, the difference was that the content of the Compound 1-2 contained in the Compound 1-1 in this comparative example was 12190 ppm.

### Comparative Example 5

Compared with Example 6, the difference was that the additive added to the electrolyte solution in this comparative example was Compound 1-2, and the content of the additive in the electrolyte solution was 20 ppm.

### Comparative Example 6

Compared with Example 8, the difference was that the additive added to the electrolyte solution in this comparative example was Compound 1-2, and the content of the additive in the electrolyte solution was 100 ppm.

### Comparative Example 7

Compared with Example 9, the difference was that the additive added to the electrolyte solution in this comparative example was Compound 1-2, and the content of the additive in the electrolyte solution was 500 ppm.

### Comparative Example 8

Compared with Comparative Example 2, the difference was that the additive added to the electrolyte solution in this comparative example was Compound 1-2, and the content of the additive in the electrolyte solution was 1 w%.

### Comparative Example 9

Compared with Example 10, the difference was that the content of the Compound 1-2 contained in the Compound 1-1 in this comparative example was 1 ppm.

### Comparative Example 10

Compared with Example 11, the difference was that the content of the Compound 6-2 contained in the Compound 6-1 in this comparative example was 1 ppm.

### Comparative Example 11

Compared with Example 11, the difference was that the additive added to the electrolyte solution in this comparative example was Compound 6-2, and the content of the additive in the electrolyte solution was 1 w%.

### Comparative Example 12

Compared with Example 12, the difference was that the electrolyte solution in this comparative example did not contain an additive.

### Comparative Example 13

Compared with Example 12, the difference was that the content of the Compound 1-2 contained in the Compound 1-1 in this comparative example was 1 ppm.

### Comparative Example 14

Compared with Example 12, the difference was that the additive added to the electrolyte solution in this comparative example was Compound 1-2, and the content of the additive in the electrolyte solution was 20 ppm.

### Battery performance test

The lithium-ion batteries or sodium-ion batteries prepared in the above Examples and Comparative Examples were subjected to the following performance tests to obtain the test results as shown in Table 1.

### (1) 1C capacity exertion

The lithium-ion battery after electrolyte injection was charged at a constant current of 0.1 C for 390 min, then aged at 45°C for 24 h, and then secondary sealing was performed. The secondary-sealed battery was charged at a constant current and constant voltage of 0.2 C to 4.2 V, then discharged at a constant current of 0.2 C to 2.75 V, then charged at a constant current and a constant voltage of 0.5 C to 4.2 V, discharged at a constant current of 0.5 C to 2.75 V, then charged at a constant current and constant voltage of 1 C to 4.2 V, and discharged at a constant current of 1 C to 2.75 V. The 1 C charge and discharge cycle was repeated 5 times, and the last discharge capacity was taken as the 1 C capacity exertion value. Fifty batteries were tested for each example, and the average value was taken to calculate the standard deviation of the 1 C capacity.

The sodium-ion battery after electrolyte injection was charged at a constant current of 0.1 C for 390 min, then aged at 45°C for 24 h, and then secondary sealing was performed. The secondary-sealed battery was charged at a constant current and constant voltage of 0.2 C to 4.0 V, then discharged at a constant current of 0.2 C to 2.0 V, then charged at a constant current and constant voltage of 0.5 C to 4.0 V, then discharged at a constant current of 0.5 C to 2.0 V, then charged at a constant current and constant voltage of 1 C to 4.0 V, and discharged at a constant current of 1 C to 2.0 V. The 1 C charge and discharge cycle was repeated 5 times, and the last discharge capacity was taken as the 1 C capacity exertion value. Fifty batteries were tested for each example, and the average value was taken to calculate the standard deviation of the 1 C capacity.

### (2) High-temperature storage performance

The formed lithium-ion battery was charged to 4.2 V at room temperature using a constant current and constant voltage of 1 C, and an initial capacity of the lithium-ion battery was measured. After being stored at 60°C for 60 days, the lithium-ion battery was discharged to 2.75 V at 1 C at room temperature, and then charged to 4.2 V. A capacity of the lithium-ion battery was measured, and a capacity retention rate and a capacity recovery rate were calculated. Three batteries were tested for each example, and the average value was taken.

The formed sodium-ion battery was charged to 4.0 V at room temperature using a constant current and constant voltage of 1 C, and an initial capacity of the battery was measured. After being stored at 60°C for 7 days, the sodium-ion battery was discharged to 2.0 V at 1 C at room temperature, and then charged to 4.0 V. The capacity of the sodium-ion battery was measured, and a capacity retention rate and a capacity recovery rate were calculated. Three batteries were tested for each example, and the average value was taken.

### (6) Low-temperature discharge performance

The formed lithium-ion battery was charged to 4.2 V at room temperature using a constant current and constant voltage of 1 C, and an initial capacity of the battery was measured. Then the battery was placed in a constant temperature box at -20°C and discharged to 2.5 V at 0.5 C. The capacity of the lithium-ion battery was measured, and the capacity retention rate was calculated. Three batteries were tested for each example, and the average value was taken.

The formed sodium-ion battery was charged to 4.0 V at room temperature using a constant current and constant voltage of 1 C, and an initial capacity of the battery was measured. Then the battery was placed in a constant temperature box at -30°C and discharged to 2.0 V at 0.5 C. The capacity of the lithium-ion battery was measured, and the capacity retention rate was calculated. Three batteries were tested for each example, and the average value was taken.

**Table 1 Performance test results of battery**

| | Solvents | The electrolyte salt and the content thereof in the electrolyte solution | The bicyclic sulfate compound and the content thereof in the electrolyte solution | The bicyclic sulfite compound contained in the bicyclic sulfate compound and the content thereof | The content of the bicyclic sulfite compound introduced via the bicyclic sulfate compound in the electrolyte solution | 1 C capacity exertion value /mAh | The standar d deviati on of the 1C capacit y exertio n | High-te mperat ure storage capacit y retentio n rate | High-te mperat ure storage capacit y recover y rate | Low-te mperat ure dischar ge capacit y retentio n rate |
|---|---|---|---|---|---|---|---|---|---|---|
| Example 3 | EC:EMC=1:2 | LiPF₆/13w % | Compound 1-1/5w% | Compound 1-1/23 ppm | 1.15 ppm | 1689.5 | 24.5 | 89.4% | 94.1% | 83.1% |
| Example 4 | EC:EMC=1:2 | LiPF₆/13w % | Compound 1-1/0.1w% | Compound 1-1/2340 ppm | 2.34 ppm | 1695.2 | 22.1 | 87.1% | 92.7% | 81.9% |
| Example 5 | EC:EMC=1:2 | LiPF₆/13w % | Compound 1-1/1w% | Compound 1-1/167 ppm | 1.67 ppm | 1701.2 | 23.3 | 90.2% | 94.6% | 83.8% |
| Example 6 | EC:EMC=1:2 | LiPF₆/13w % | Compound 1-1/1w% | Compound 1-2/2340 ppm | 23.4 ppm | 1708.9 | 17.5 | 91.3% | 95.0% | 84.2% |
| Example 7 | EC:EMC=1:2 | LiPF₆/13w % | Compound 1-1/1w% | Compound 1-2/4117 ppm | 41.17 ppm | 1715.6 | 11.4 | 92.0% | 96.1% | 85.0% |
| Example 8 | EC:EMC=1:2 | LiPF₆/13w % | Compound 1-1/1w% | Compound 1-2/9130 ppm | 91.30 ppm | 1716.6 | 15.8 | 91.3% | 95.7% | 85.5% |
| Example 9 | EC:EMC=1:2 | LiPF₆/13w % | Compound 1-1/5w% | Compound 1-2/9130 ppm | 456.5 ppm | 1705.1 | 19.2 | 89.6% | 94.0% | 85.6% |
| Example 10 | EC:FEMC=1:2 | LiPF₆/13w % | Compound 1-1/1w% | Compound 1-2/2340 ppm | 23.4 ppm | 1706.5 | 18.2 | 91.5% | 96.1% | 83.6% |
| Example 11 | EC:EMC=1:2 | LiPF₆/13w % | Compound 6-1/1w% | Compound 6-2/2013 ppm | 20.1 ppm | 1704.2 | 18.9 | 91.1% | 94.8% | 84.0% |
| Example 12 | EC:PC:EMC=0. 5:0.5:2 | NaPF₆/14w % | Compound 1-1/1w% | Compound 1-2/2340 ppm | 23.4 ppm | 649.2 | 11.1 | 86.2% | 95.8% | 82.1% |
| Example 13 | EC:EMC=1:2 | LiPF6/13w % | Compound 1-1/0.05w% | Compound 1-2/2340 ppm | 1.17 ppm | 1678.2 | 24.1 | 85.7% | 91.7% | 80.9% |
| Example 14 | EC:EMC=1:2 | LiPF6/13w % | Compound 1-1/6w% | Compound 1-2/23 ppm | 1.38 ppm | 1676.5 | 23.9 | 87.7% | 92.1% | 81.1% |
| Comparat ive Example 1 | EC:EMC=1:2 | LiPF₆/13w % | / | / | / | 1673.1 | 31.5 | 85.1% | 90.2% | 80.3% |
| Comparat ive Example 2 | EC:EMC=1:2 | LiPF₆/13w % | Compound 1-1/1w% | Compound 1-2/1 ppm | 0.01 ppm | 1678.3 | 30.3 | 89.5% | 94.4% | 82.9% |
| Comparat ive Example 3 | EC:EMC=1:2 | LiPF₆/13w % | Compound 1-1/5w% | Compound 1-2/1 ppm | 0.05 ppm | 1677.1 | 31.2 | 87.1% | 92.7% | 82.6% |
| Comparat ive Example 4 | EC:EMC=1:2 | LiPF₆/13w % | Compound 1-1/5w% | Compound 1-2/12190 ppm | 609.5 ppm | 1680.3 | 29.5 | 87.9% | 93.2% | 83.5% |
| Comparat ive Example 5 | EC:EMC=1:2 | LiPF₆/13w % | Compound 1-2/20 ppm | / | / | 1671.1 | 31.2 | 84.8% | 88.5% | 80.2% |
| Comparat ive Example 6 | EC:EMC=1:2 | LiPF₆/13w % | Compound 1-2/100 ppm | / | / | 1662.8 | 35.9 | 83.1% | 87.6% | 80.3% |
| Comparat ive Example 7 | EC:EMC=1:2 | LiPF₆/13w % | Compound 1-2/500 ppm | / | / | 1659.3 | 37.3 | 82.5% | 86.8% | 80.9% |
| Comparat ive Example 8 | EC:EMC=1:2 | LiPF₆/13w % | Compound 1-2/1w% | / | / | 1650.0 | 41.1 | 80.3% | 84.6% | 83.6% |
| Comparat ive Example 9 | EC:FEMC=1:2 | LiPF₆/13w % | Compound 1-1/1w% | Compound 1-2/1 ppm | 0.01 ppm | 1672.2 | 33.2 | 85.7% | 90.9% | 81.5% |
| Comparat ive Example 10 | EC:EMC=1:2 | LiPF₆/13w % | Compound 6-1/1w% | Compound 6-2/1 ppm | 0.01 ppm | 1676.3 | 30.7 | 88.1% | 93.3% | 82.3% |
| Comparat ive Example 11 | EC:EMC=1:2 | LiPF₆/13w % | Compound 6-2/1w% | / | / | 1642.0 | 43.1 | 79.0% | 83.8% | 82.1% |
| Comparat ive Example 12 | EC:PC:EMC=0. 5:0.5:2 | NaPF₆/14w % | / | / | / | 629.3 | 23.1 | 82.9% | 92.2% | 80.2% |
| Comparat ive Example 13 | EC:PC:EMC=0. 5:0.5:2 | NaPF₆/14w % | Compound 1-1/1w% | Compound 1-2/1 ppm | 0.01 ppm | 638.5 | 20.4 | 84.1% | 93.9% | 81.5% |
| Comparat ive Example 14 | EC:PC:EMC=0. 5:0.5:2 | NaPF₆/14w % | Compound 1-2/20 ppm | / | / | 628.1 | 23.4 | 82.9% | 93.0% | 80.1% |

Comparing Examples 3-11 to Comparative Example 1 can verify that the addition of the bicyclic sulfate compound containing a small amount of the bicyclic sulfite to the electrolyte solution can significantly improve the high-temperature storage performance, the low-temperature discharge performance and the capacity exertion of the lithium-ion battery, and when the content of the bicyclic sulfite compound introduced into the electrolyte solution is in the range of 1 ppm to 500 ppm, the lithium-ion battery has better overall performance. Compared with Comparative Examples 2, 3 and 9 where the added bicyclic sulfate compound contains almost no bicyclic sulfite compound, the electrolyte solution in which a small amount of the bicyclic sulfite compound is simultaneously introduced can increase the capacity exertion of the lithium-ion battery and significantly improve the capacity consistency of the lithium-ion battery, and at the same time, it has no negative effect on the high-temperature storage performance and the low-temperature discharge performance of the lithium-ion battery, and can even further improve the high-temperature storage performance and the low-temperature discharge performance.

It can be seen from Comparative Example 4 that when the content of the bicyclic sulfite compound contained in the bicyclic sulfate compound exceeds 10000 ppm, and the content of the bicyclic sulfite compound added to the electrolyte solution exceeds 500 ppm, the 1 C capacity exertion value of the lithium-ion battery is significantly reduced and the standard deviation of the 1 C capacity is greatly increased, indicating that the introduction of the excessive bicyclic sulfite compound is not conducive to the capacity exertion and the capacity consistency of the lithium-ion battery.

According to the experimental data of Example 6 and Comparative Example 5, Example 8 and Comparative Example 6, and Example 9 and Comparative Example 7, it can be seen that when only a small amount of the bicyclic sulfite compound is added to the electrolyte, it not only has a negative effect on the high-temperature storage of the lithium-ion battery, but also inhibits the capacity exertion of the lithium-ion battery and makes the capacity consistency worse. It can be seen from Comparative Example 8 and Comparative Example 1 that when only a relatively large amount of the bicyclic sulfite compound (1w%) is added to the electrolyte solution, it has a small improvement on the low-temperature discharge performance of the lithium-ion battery, but has a greater negative effect on high-temperature storage, battery capacity exertion and capacity consistency.

It can be seen from the experimental data of Example 11, Comparative Example 10 and Comparative Example 11 that the addition of the bicyclic sulfate compound 6-1 containing a small amount of the bicyclic sulfite compound 6-2 to the electrolyte solution can also significantly improve the high-temperature storage performance, the low-temperature discharge performance, the capacity exertion and the capacity consistency of the lithium-ion battery.

It can be seen from the experimental data of Example 12 and Comparative Examples 12 to 14 that the addition of the bicyclic sulfate compound containing a small amount of the bicyclic sulfite compound to the electrolyte solution can also significantly improve the high-temperature storage performance, the low-temperature discharge performance, the capacity exertion and the capacity consistency of the sodium-ion battery. When the bicyclic sulfate compound containing almost no bicyclic sulfite compound is added to the electrolyte solution of the sodium-ion batteries, it only slightly improves high-temperature storage, low-temperature discharge and capacity exertion of the sodium-ion battery, and it is not conducive to improving the capacity consistency. When only a small amount of bicyclic sulfite is added to the electrolyte solution of the sodium-ion battery, there is almost no improvement in the performance of the sodium-ion battery.

As can be seen from Example 3 and Examples 13 to 14, by specifically selecting the content of the bicyclic sulfate compound in the non-aqueous electrolyte solution, it is possible to effectively improve high-temperature storage performance and low-temperature discharge performance of the battery, and to improve the capacity exertion and capacity consistency of the battery.

The above experimental data fully demonstrate that a small amount of the bicyclic sulfite compound can synergize with the bicyclic sulfate compound, which can not only further improve high-temperature storage performance and low-temperature discharge performance of the lithium-ion battery and the sodium-ion battery, but also significantly improve the capacity exertion and the capacity consistency of the battery.

Finally, the above embodiments are only used to illustrate the technical solution of the present application rather than to limit the same. Although the present application is described in detail with reference to preferred embodiments, those skilled in the art should understand that the technical solution of the present application can be modified or replaced equivalently without departing from the purpose and scope of the technical solution of the present application, which should be covered by the claims of the present application.

## Claims

1. A non-aqueous electrolyte solution, comprising a bicyclic sulfate compound having a structure represented by Formula 1 and a bicyclic sulfite compound having a structure represented by Formula 2, 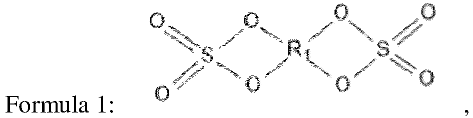 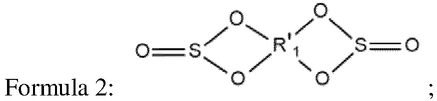
in Formula 1 and Formula 2, R₁ and R'₁ are each a linking group independently selected from the group consisting of alkyl having 2 to 8 carbon atoms, cycloalkyl, phenyl, and a combination thereof, and R₁ and R'₁ are the same to or different from each other; and
a content of the bicyclic sulfite compound in the non-aqueous electrolyte solution is 1 ppm to 500 ppm, based on a total mass of the non-aqueous electrolyte solution.

2. The non-aqueous electrolyte solution according to claim 1, wherein the content of the bicyclic sulfite compound in the non-aqueous electrolyte solution is 2 ppm to 100 ppm, based on the total mass of the non-aqueous electrolyte solution.

3. The non-aqueous electrolyte solution according to claim 1 or 2, wherein a mass percentage of the bicyclic sulfate compound in the non-aqueous electrolyte solution is 0.1% to 5%, based on the total mass of the non-aqueous electrolyte solution.

4. The non-aqueous electrolyte solution according to any one of claims 1-3, wherein a mass ratio of the bicyclic sulfite compound to the bicyclic sulfate compound in the non-aqueous electrolyte solution is 2×10⁻⁵ to 1×10⁻².

5. The non-aqueous electrolyte solution according to claim 4, wherein the mass ratio of the bicyclic sulfite compound to the bicyclic sulfate compound in the non-aqueous electrolyte solution is 2×10⁻⁵ to 5×10⁻³.

6. The non-aqueous electrolyte solution according to any one of claims 1-5, wherein the bicyclic sulfite compound in the non-aqueous electrolyte solution is introduced via the bicyclic sulfate compound.

7. The non-aqueous electrolyte solution according to any one of claims 1-6, wherein, in Formula 1 and Formula 2, both R₁ and R'₁ are linking groups having a structure of 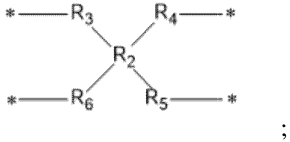
wherein, R₂ is selected from the group consisting of 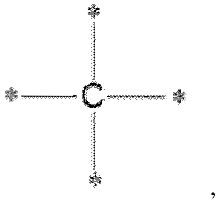 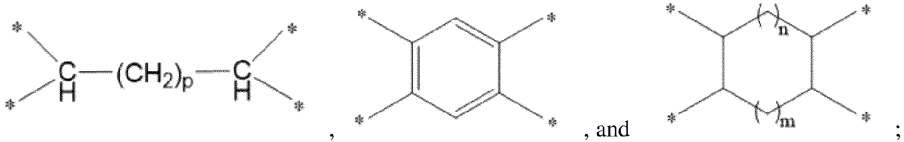
p is an integer from 0 to 6, n is an integer from 0 to 3, and m is an integer from 0 to 3; and
R₃, R₄, R₅, and R₆ are each independently selected from the group consisting of a carbon-carbon single bond, methylene, and 1,2-ethylidene.

8. The non-aqueous electrolyte solution according to claim 7, wherein the bicyclic sulfate compound is selected from the group consisting of compounds represented by the following structural formulae: 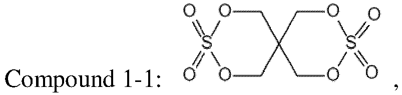 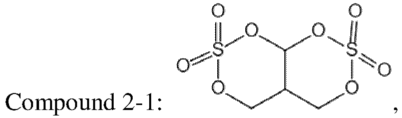 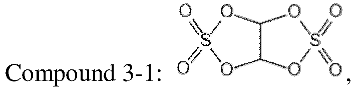 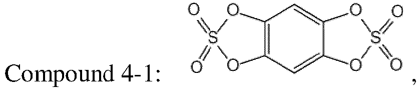 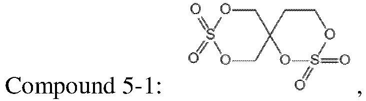 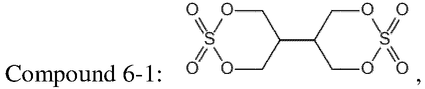 and 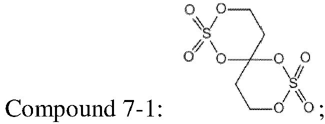 and
the bicyclic sulfite compound is selected from the group consisting of compounds represented by the following structural formulae: 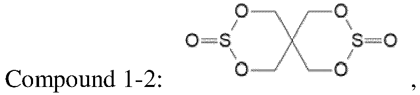 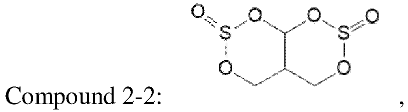 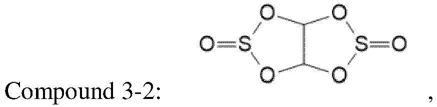 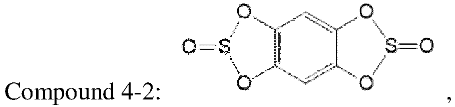 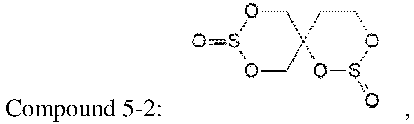 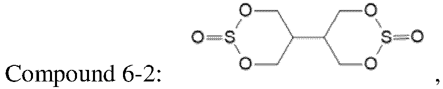 and

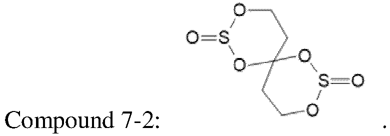

9. The non-aqueous electrolyte solution according to any one of claims 1-8, further comprising a non-aqueous solvent;
the non-aqueous solvent is selected from the group consisting of a cyclic solvent, a linear solvent, and a combination thereof;
the cyclic solvent is selected from the group consisting of ethylene carbonate, propylene carbonate, γ-butyrolactone, phenyl acetate, 1,4-butane sultone, 3,3,3-trifluoropropylene carbonate, and a combination thereof;
the linear solvent is selected from the group consisting of dimethyl carbonate, ethyl methyl carbonate, diethyl carbonate, methyl formate, ethyl acetate, methyl acetate, propyl acetate, butyl acetate, methyl propionate, ethyl propionate, propyl propionate, butyl propionate, methyl butyrate, ethyl butyrate, ethylene glycol diethyl ether, diethylene glycol dimethyl ether, methyl propyl carbonate, 1,1,2,2-tetrafluoroethyl-2,2,3,3-tetrafluoropropyl ether, methyl 2,2,2-trifluoroethyl carbonate, bis(2,2,2-trifluoroethyl)carbonate, 2,2-difluoroethyl acetate, 2,2-difluoroethyl propionate, 2,2-difluoroethyl methyl carbonate, and a combination thereof; and
a mass percentage of the non-aqueous solvent in the non-aqueous electrolyte solution is 75% to 94.99%.

10. The non-aqueous electrolyte solution according to any one of claims 1-9, further comprising an electrolyte salt;
the electrolyte salt is selected from the group consisting of a lithium salt and a sodium salt;
the lithium salt is selected from the group consisting of lithium hexafluorophosphate,
lithium tetrafluoroborate, lithium bis(oxalato)borate, lithium difluorophosphate, lithium difluoro(oxalato)phosphate, lithium difluoro(oxalato)borate, lithium tetrafluoro(oxalato)phosphate, lithium bis(fluorosulfonyl)imide, and a combination thereof;
the sodium salt is selected from the group consisting of sodium fluorophosphate, sodium tetrafluoroborate, sodium trifluoromethanesulfonate, sodium bis(oxalato)borate, sodium difluorophosphate, sodium difluoro(oxalato)phosphate, sodium tetrafluoro(oxalato)phosphate, sodium bis(fluorosulfonyl)imide, and a combination thereof; and
a mass percentage of the electrolyte salt in the non-aqueous electrolyte solution is 5% to 20%.

11. A secondary battery, comprising:
a positive electrode,
a negative electrode,
a separator, and
the non-aqueous electrolyte solution according to any one of claims 1-10.
